# FASCICULE DE BREVET EUROPEEN

(11) **EP 2 260 621 B1**
(45) Date de publication et mention de la délivrance du brevet: **01.08.2018**
(21) Numéro de dépôt: 09711829.3
(22) Date de dépôt: 09.02.2009
(51) Int. Cl.: H04L 12/70

(54) **PROCEDE ET DISPOSITIF DE CONTROLE DE LA QUALITE DE SERVICE DANS UN RESEAU**
VERFAHREN UND EINRICHTUNG ZUR ÜBERWACHUNG DER DIENSTGÜTE IN EINEM NETZ
METHOD AND DEVICE FOR MONITORING SERVICE QUALITY IN A NETWORK

(30) Priorité: 20.02.2008 FR 0851098
(43) Date de publication de la demande: 15.12.2010
(73) Titulaire: Orange, 75015 Paris (FR)
(72) Inventeur: SALAUN, Mikaël, F-29590 Rosnoen (FR); KLEIS, Michael, 10963 Berlin (DE); RADIER, Benoît, F-22700 Perros Guirec (FR)
(74) Mandataire: Delumeau, François Guy
(86) Numéro de dépôt international: PCT/FR2009/050199
(87) Numéro de publication internationale: WO 2009/103919

(56) Documents cités:
- EP-A- 1 404 081
- EP-A- 1 874 019
- US-A1- 2001 026 553

## Description

### Arrière-plan de l'invention

L'invention se rapporte au domaine général du contrôle de la qualité d'un service dans un réseau de télécommunications.

Elle s'applique de façon préférentielle, mais non limitative, dans les réseaux hétérogènes dans lesquels des terminaux de différents types accèdent, via des réseaux d'accès de différents types, à des services multimédia.

Dans l'état actuel de la technique, les paramètres de la qualité du service offerte à un utilisateur sont gérés par le fournisseur de service lui-même, le rôle de l'opérateur réseau consistant essentiellement à transporter le flux de données multimédia entre le fournisseur de service et le terminal de l'utilisateur.

Bien entendu, dans cette demande du brevet, l'expression "fournisseur de service" vise les équipements informatiques du fournisseur de service et non pas l'entreprise commerciale qui offre le service.

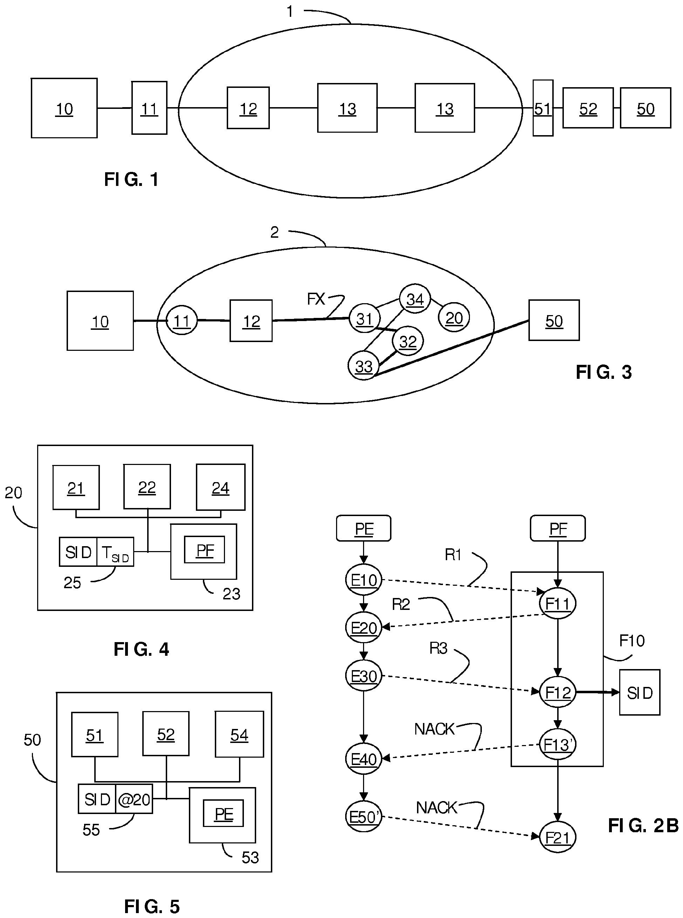

La **figure 1** illustre ce mécanisme. Sur cette figure, on a représenté un terminal 10 souhaitant télécharger, dans un réseau de télécommunications 1, un flux multimédia à partir d'un serveur de contenu 50 d'un fournisseur de service.

Dans cet exemple décrit ici, le terminal 10 accède au réseau 1 par l'intermédiaire d'une passerelle résidentielle 11 à laquelle il est relié par une liaison de type Wifi.

La passerelle résidentielle 11 communique avec des routeurs 13 du réseau 1 par l'intermédiaire d'un dispositif DSLAM 12.

De façon connue, le DSLAM 12 est un équipement adapté à récupérer le flux de données transitant sur les lignes téléphoniques auquel il est raccordé et à multiplexer ses données pour les rediriger vers le réseau de l'opérateur.

Du côté du fournisseur de service, nous supposons que le serveur de contenu 50 est placé derrière un transcodeur 52 qui adapte le format du flux multimédia en fonction des caractéristiques du terminal 10 et de son réseau d'accès.

Dans l'exemple décrit ici, le flux multimédia est sécurisé par un équipement 51 de type Firewall.

Dans l'état actuel de la technique, la chaîne d'équipements illustrée à la figure 1 est établie, par l'opérateur, de façon statique lorsque l'utilisateur du terminal 10 s'abonne au service concerné.

Par exemple, lorsque l'utilisateur souscrit à un service de vidéo à la demande sur Internet, l'opérateur établit une chaîne statique dans laquelle :
- la liaison entre la passerelle résidentielle 11 et le DSLAM 12 comporte des canaux virtuels VC ;
- les routeurs 13 sont statiquement prédéfinis dans une table de routage de l'opérateur ; et
- le Firewall 51 et le transcodeur 52 sont choisis pour permettre la sécurisation et le codage du flux multimédia en fonction des caractéristiques du terminal utilisateur (set-top box) 10 et du réseau d'accès (Wifi, ADSL).

Vue de l'opérateur cette configuration est très lourde, et ne peut être optimisée en fonction de la demande réelle des utilisateurs.

Par ailleurs, elle oblige en pratique le fournisseur de service a prévoir un contenu dédié à chaque type d'équipement utilisateur et chaque type de réseau d'accès sans fil (GPRS, UMTS, Wifi...) ou filaire (ADSL, FTTH...).

On connaît aussi, par la publication du document EP 1 404 081, un serveur d'authentification apte à communiquer, à un contrôleur réseau, des paramètres de transport pour l'établissement d'une connexion entre un équipement de terminaison et un serveur d'accès.

### Objet et résumé de l'invention

La présente invention permet un contrôle de la qualité d'un service de bout en bout dans un réseau de télécommunications qui ne présente pas les inconvénients de l'art antérieur.

Ainsi, l'invention concerne un procédé mis en oeuvre par un dispositif de contrôle pour contrôler la qualité de service de bout en bout selon la revendication 1, un dispositif correspondant selon la revendication 4, un programme d'ordinateur correspondant selon la revendication 7, un support d'enregistrement correspondant selon la revendication 8, un procédé mis en oeuvre par un serveur selon la revendication 9, le serveur correspondant selon la revendication 11 et le programme d'ordinateur correspondant selon la revendication 10. Les revendications dépendantes définissent des modes de réalisations préférés. Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1, déjà décrite, illustre un mécanisme de contrôle de qualité de service de bout en bout connu de l'art antérieur ;
- les figures 2A et 2B, illustrent, de façon schématique, des étapes d'un procédé de contrôle de la qualité de service et des étapes d'un procédé de mise en oeuvre d'un service conformes à l'invention dans un mode particulier de réalisation ;

- la figure 3 illustre dans un mode de représentation similaire à celui de la figure 1, le résultat des procédés de la figure 2A ;
- les figures 4 et 5 représentent respectivement un dispositif de contrôle de la qualité de service et un serveur conformes à l'invention dans un mode particulier de l'invention.

### Description détaillée d'un mode de réalisation

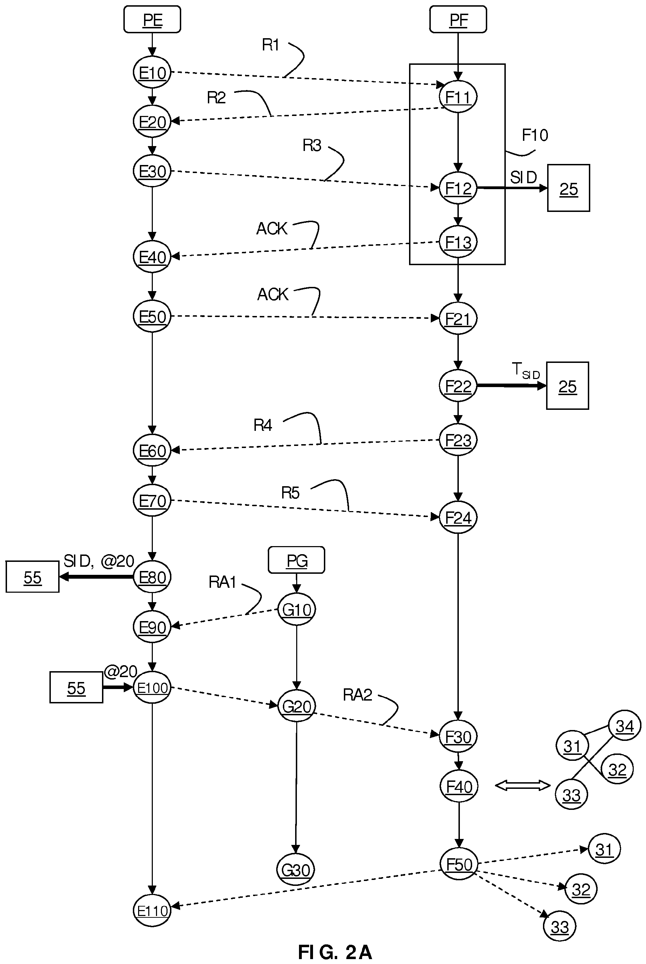

La **figure 2A** illustre de façon schématique des étapes d'un procédé pour contrer la qualité d'un service dans un réseau de télécommunications (ci-après « procédé PE ») et des étapes d'un procédé de mise en oeuvre d'un service (ci-après « procédé PF ») conformes à l'invention dans un mode particulier de réalisation.

Dans le mode de réalisation décrit ici, chacun de ces procédés est mis en oeuvre par un programme d'ordinateur.

Sur la figure 2A, on a référencé PF un programme d'ordinateur conforme à l'invention mettant en oeuvre les étapes d'un procédé de contrôle de qualité de service selon l'invention lorsqu'il est exécuté par un ordinateur.

On a référencé PE un programme d'ordinateur comportant des instructions pour exécuter les étapes d'un procédé de mise en oeuvre d'un service conformément à l'invention lorsque ce programme est exécuté par un ordinateur.

Le procédé pour contrôler la qualité d'un service conforme à l'invention et le procédé de mise en oeuvre d'un service conforme à l'invention sont respectivement exécutés par un dispositif de contrôle 20 et un serveur 50 qui vont maintenant être décrits en référence aux figures 4 et 5.

A la **figure 4****,** on a représenté, de façon schématique, un dispositif 20 de contrôle de la qualité d'un service conforme à l'invention dans un mode particulier de réalisation.

Dans l'exemple décrit ici, ce dispositif de contrôle 20 a l'architecture matériel d'un ordinateur.

Il comporte notamment un processeur 21, une mémoire vive de type RAM 22 et une mémoire morte 23 dans laquelle est enregistrée le programme d'ordinateur PF représenté à la figure 2A.

La mémoire vive 22 comporte des registres permettant l'exécution de ce programme d'ordinateur PF par le processeur 21.

Le dispositif de contrôle 20 conforme à l'invention comporte également des moyens 24 de communication.

Dans le mode de réalisation décrit ici, le dispositif 20 de contrôle selon l'invention comporte une mémoire non volatile réinscriptible de type flash 25.

Dans cette mémoire, le dispositif de contrôle 20 conforme à l'invention mémorise au moins un identifiant de contrat SID négocié avec le serveur 50 selon l'invention et un fichier T_{SID} comportant les fonctions qui doivent être mises en oeuvre par le réseau pour satisfaire le contrat SID.

En référence à **la** **figure 5**, le serveur 50 conforme à l'invention a, dans ce mode de réalisation particulier, l'architecture matérielle d'un ordinateur.

Ce serveur 50 comporte un processeur 51, une mémoire vive de type RAM 52 et une mémoire morte de type ROM 53 dans laquelle est enregistré le programme d'ordinateur PE représenté à la figure 2A.

La mémoire vive 22 comporte des registres permettant l'exécution de ce programme d'ordinateur PE par le processeur 51.

Le serveur 50 comporte des moyens 54 de communication.

Dans le mode de réalisation décrit ici, le serveur 50 comporte une base de données 55 dans laquelle sont enregistrées l'identifiant d'un contrat 55 négocié avec le dispositif 20 de contrôle selon l'invention en association avec l'adresse @20 de ce dispositif sur le réseau.

Dans le mode de réalisation de l'invention représenté à la figure 2A, le procédé PE comporte une étape E10 au cours de laquelle le serveur 50 du fournisseur de service envoie une requête R1 au dispositif 20 de contrôle selon l'invention pour initier une négociation de contrat, ce contrat devant définir les caractéristiques du service de transport, ou plus généralement du réseau, pour la mise en oeuvre de ce service.

Ce contrat définit notamment les paramètres de qualité de service nécessaires C_{SID} (autrement appelés « contraintes »). Ces contraintes peuvent par exemple être choisies parmi un coût maximum acceptable pour ce service, des paramètres requis en termes de taux de perte, de délais, ou de bande passante, ....

Dans l'exemple de réalisation décrit ici, le contrat SID comporte également une définition P_{SID} de certaines fonctions qui doivent être rendues par le réseau. Ces fonctions P_{SID} peuvent notamment être des services de sécurisation ou de transcodage.

De façon optionnelle, le contrat SID peut également contenir l'ensemble S_{SID} des serveurs de contenu utilisés pour ce service.

De façon optionnelle, le contrat SIS peut également contenir l'ensemble A_{SID} des passerelles d'autorisation d'accès à ce service.

La requête R1 émise par le serveur 50, est reçue par le dispositif de contrôle 20 au cours d'une étape F11 du procédé PF.

Au cours de cette étape F11, le dispositif de contrôle 20 établit une offre de transport pour mettre en oeuvre ledit service éventuellement associée à des informations de coût.

Cette offre est transmise au serveur 50 dans une réponse R2 reçue par leur serveur 50 au cours d'une étape E20 du procédé PE.

Au cours d'une étape E30 du procédé PE, le serveur 50 du fournisseur de service sélectionne à partir de l'offre reçue, un certain nombre de composants de service. Il transmet la liste de ces composants de service au dispositif 20 de contrôle dans un message R3 reçu au cours d'une étape F12 du procédé PF.

Nous supposerons, dans l'exemple de la figure 2A, que le dispositif de contrôle 20 accepte de mettre en oeuvre les composants sélectionnés par le serveur 50, autrement dit qu'il accepte les termes du contrat négocié avec ce serveur.

Dans ces conditions, au cours de l'étape F12, le dispositif 20 de contrôle selon l'invention génère l'identifiant SID de ce contrat et le mémorise dans sa mémoire non volatile réinscriptible 25.

Puis, au cours d'une étape F13, le dispositif 20 de contrôle selon l'invention envoie un accusé de réception positif ACK au serveur 50, cet accusé de réception étant reçu par le serveur au cours d'une étape E40 du procédé PE.

Les étapes F11, F12 et F13 du procédé PF constituent une étape F10 de négociation au sens de l'invention.

Dans le mode de réalisation décrit ici, le serveur 50 envoie à son tour, au cours d'une étape E50, un message d'acquittement positif ACK au dispositif de contrôle 20 conforme à l'invention.

Ce message d'acquittement positif ACK est reçu par le dispositif 20 au cours d'une étape F21.

Conformément à l'invention, après la négociation du contrat SID, le dispositif de contrôle 20 détermine, au cours d'une étape F22, les fonctions qui doivent être mises en oeuvre par le réseau pour satisfaire le contrat SID.

Ces fonctions sont mémorisées dans un fichier T_{SID}, celui-ci étant associé, dans la mémoire non volatile réinscriptible 25, avec l'identifiant du contrat SID.

Dans l'exemple de réalisation décrit ici, le dispositif 20 de contrôle selon l'invention envoie, dans un message R4, son adresse @20 au serveur 50, au cours d'une étape F23 du procédé PF, ce message étant reçu par le serveur 50 au cours d'une étape E60 du procédé PE.

Dans l'exemple de réalisation décrit ici, le serveur 50 envoie, au cours d'une étape 70 du procédé PE, un message d'acquittement R5 reçu par le dispositif de contrôle 20 au cours d'une étape F24.

Puis, au cours d'une étape E80, le serveur 50 mémorise, dans sa base de données 50, l'identifiant SID du contrat en association avec l'adresse @20 du dispositif de contrôle 20 selon l'invention.

Sur la figure 2A, on a également représenté un procédé PG pouvant être mis en oeuvre par le terminal 10 d'un utilisateur pour accéder au service concerné.

De façon connue, lorsque l'utilisateur du terminal 10 souhaite accéder au service, il envoie, au cours d'une étape G10 du procédé PG, une requête d'accès RA1 à destination du serveur 50.

Nous supposerons que le serveur 50 reçoit cette requête d'accès RA1 au cours d'une étape E90 du procédé PE.

Conformément à l'invention, sur réception de la requête d'accès RA1, le serveur 50 identifie, dans sa base de données 55, au cours d'une étape E100, l'adresse @20 du dispositif 20 de contrôle avec lequel il a négocié le contrat SID pour la mise en oeuvre de ce service.

Puis, au cours de la même étape E100, le serveur 50 envoie une requête au terminal utilisateur, pour le rediriger vers le dispositif 20 de contrôle selon l'invention.

Par conséquent, le terminal utilisateur 10 envoie une requête RA2 au dispositif de contrôle selon l'invention pour accéder au service, cette requête étant reçue par le dispositif 20 au cours d'une étape F30 du procédé PF.

Conformément à l'invention, sur réception de cette requête RA2, le dispositif 20 de contrôle selon l'invention sélectionne, au cours d'une étape F40, les équipements du réseau aptes à mettre en oeuvre les fonctions mémorisées dans le fichier T_{SID}.

Nous supposerons dans cet exemple que les fonctions nécessaires sont une fonction de routage, une fonction de sécurisation, et une fonction de transcodage.

Dans l'exemple de réalisation décrit ici, dans lequel le réseau de télécommunications est un réseau de pairs, l'étape F40 consiste à identifier des pairs du réseau aptes à rendre ses fonctions et à les sélectionner par un processus d'élection.

Nous supposerons dans cet exemple que le serveur 20 identifie que les pairs 31, 32 et 33 sont respectivement aptes à router le flux de données, à sécuriser le flux et à le transcoder.

Puis, au cours d'une étape F50, le dispositif 20 de contrôle selon l'invention établit, dans le réseau de télécommunications, un chemin entre le terminal utilisateur et le serveur 50 via la chaîne de pairs 31, 32, 33.

Pour ce faire, le dispositif de contrôle 20 envoie, à chacun de ces équipements, les caractéristiques de la fonction qu'il doit remplir, ainsi que l'identifiant des équipements avec lesquels il doit communiquer dans la chaîne.

Nous supposerons que le serveur 50 reçoit les informations qui le concernent au cours d'une étape E110 du procédé PE.

Le chemin établi pour le dispositif 20 de contrôle selon l'invention, entre le terminal utilisateur 10 et le serveur de contenu 50 est représenté à la **figure 3** en traits gras.

Ce chemin comporte notamment :
- un tronçon entre l'équipement DSLAM 12 et le pair 31 mettant en oeuvre la fonction de routage ;
- un tronçon entre le pair 31 et le pair 32 mettant en oeuvre la fonction de sécurisation ;
- un tronçon entre le pair 32 et le pair 33 mettant en oeuvre la fonction de transcodage ; et
- un tronçon entre le pair 33 et le serveur de contenu 50.

A la figure 2A précédemment décrite, on a supposé que le dispositif de contrôle 20 acceptait les composants de service reçus du serveur 50 dans le message R3.

Nous allons maintenant décrire en référence à la **figure 2B****,** le déroulement des procédés PE et PF lorsque le dispositif de contrôle 20 refuse au moins un de ces composants.

Dans ce cas, après réception à l'étape F12 du message R3, le dispositif 20 de contrôle selon l'invention envoie, au cours d'une étape F13', un accusé de réception négatif NACK au serveur 50, ce message NACK étant reçu au cours de l'étape E40 du procédé PE déjà décrite.

Dans le mode de réalisation décrit ici, le serveur 50 envoie à son tour, au cours d'une étape E50', un message d'acquittement négatif NACK au dispositif 20 de contrôle selon l'invention, ce message étant reçu au cours de l'étape F21 du procédé PF.

## Revendications

1. Procédé, mis en oeuvre par un dispositif (20) de contrôle, pour contrôler la qualité d'un service de bout en bout dans un réseau de télécommunications (2), comportant :
- une étape (F10) de négociation, avec le fournisseur dudit service (50), d'un contrat (SID) comportant au moins un paramètre de qualité dudit service ;
- une étape (F22) de détermination des fonctions (T_{SID}) qui doivent être mise en oeuvre par le réseau (2) pour satisfaire ledit contrat (SID) ;
- une étape (F30) de réception d'une requête (RA2) d'un terminal (10) pour accéder audit service ;
- une étape (F40) de sélection, sur réception de ladite requête (RA2), d'au moins un équipement (31, 32, 33) dudit réseau apte à mettre en oeuvre lesdites fonctions (T_{SID}) ; et
- une étape (F50) d'établissement, dans ledit réseau (2), d'un chemin entre ledit terminal (10) et ledit fournisseur de service (50), via ledit au moins un équipement (31, 32, 33), ladite étape d'établissement étant effectuée après ladite étape de sélection, en envoyant, à chacun desdits au moins un équipement (31, 32, 33), les caractéristiques desdites fonctions que ledit au moins un équipement (31, 32, 33) doit remplir, ainsi que l'identifiant dudit au moins un équipement de la chaîne avec lesquels il doit communiquer.

2. Procédé de contrôle selon la revendication 1, **caractérisé en ce que** ledit au moins un paramètre de qualité de service est choisi en fonction d'au moins une caractéristique :
- dudit terminal (10) ;
- d'un réseau d'accès dudit terminal (10) audit réseau de télécommunications (2) ;
- d'un protocole de codage d'un flux de données (FX) devant être transporté entre ledit terminal (10) et ledit fournisseur de service (50).

3. Procédé de contrôle selon la revendication 1 ou 2, **caractérisé en ce que** ladite au moins une fonction est choisie parmi l'ensemble comprenant une fonction de transcodage de flux de données (FX), une fonction de sécurisation de flux de données (FX) et une fonction de routage de flux de données (FX),
ladite au moins une fonction étant destinée à être appliquée à un flux de données devant être transporté entre ledit terminal (10) et ledit fournisseur de service (50).

4. Dispositif (20) de contrôle de la qualité d'un service de bout en bout pouvant être utilisé dans un réseau de télécommunications, **caractérisé en ce qu'**il comporte :
- des moyens pour négocier, avec un fournisseur de service (50), un contrat (SID) comportant au moins un paramètre de qualité dudit service ;
- des moyens pour déterminer des fonctions (T_{SID}) qui doivent être mise en oeuvre par le réseau (2) pour satisfaire ledit contrat (SID) ;
- des moyens de réception d'une requête (RA2) d'un terminal (10) pour accéder audit service ;
- des moyens de sélection, sur réception de ladite requête (RA2), d'au moins un équipement (31, 32, 33) dudit réseau (2) apte à mettre en oeuvre lesdites fonctions (T_{SID}) ; et
- des moyens d'établissement dans ledit réseau (2), d'un chemin entre ledit terminal (10) et ledit fournisseur de service (50), via ledit au moins un équipement (31, 32, 33), le chemin étant établi après la sélection dudit au moins un équipement, en envoyant par lesdites moyens d'établissement, à chacun desdits au moins un équipement (31, 32, 33), les caractéristiques desdites fonctions que ledit au moins un équipement (31, 32, 33) doit remplir, ainsi que l'identifiant dudit au moins un équipement de la chaîne avec lesquels il doit communiquer.

5. Dispositif (20) selon la revendication 4, pouvant être utilisé dans un réseau de pairs hybride (2), **caractérisé en ce qu'**il est constitué par un super pair dudit réseau.

6. Serveur (50) pouvant être connecté à un réseau télécommunications, **caractérisé en ce qu'**il comporte :
- des moyens de réception, en provenance d'un terminal (10), d'une requête (RA1) d'accès à un service ;
- des moyens pour identifier, dans une base de données (55), l'adresse (@20) d'un dispositif (20) dudit réseau (2) en fonction d'un identifiant dudit service et d'un contrat (SID) comportant au moins un paramètre de qualité dudit service ; et
- des moyens pour rediriger ledit terminal (10) vers ledit dispositif (20), ledit serveur comportant en outre des moyens d'un serveur selon la revendication 11.

7. Programme d'ordinateur comportant des instructions pour l'exécution des étapes du procédé de contrôle de qualité selon l'une quelconque des revendications 1 à 3 lorsque ledit programme est exécuté par un ordinateur (20).

8. Support d'enregistrement lisible par un ordinateur (20) sur lequel est enregistré un programme d'ordinateur comprenant des instructions pour l'exécution des étapes du procédé de contrôle de qualité de service selon l'une quelconque des revendications 1 à 3.

9. Procédé, mis en oeuvre par un serveur (50), de négociation d'une qualité de service de transport de bout à bout dans un réseau de télécommunication (2), ce procédé comportant :
- une étape (E10) d'envoi à un dispositif de contrôle (20) selon la revendication 4 d'une requête (R1) pour initier une négociation de contrat, ce contrat devant définir les caractéristiques dudit service, ledit contrat comportant au moins un paramètre de qualité dudit service ;
- une étape (E20) de réception d'une réponse (R2) comportant une offre de transport établie par ledit dispositif de contrôle pour mettre en oeuvre ledit service ;
- une étape (E30) de sélection d'au moins un composant de service à partir de ladite offre et d'envoi d'une liste desdits composants audit dispositif de contrôle (20);
- une étape (E40) de réception d'un accusé de réception positif émis par ledit dispositif de contrôle ; et
- une étape (E50) d'envoi d'un message d'acquittement positif audit dispositif de contrôle (20) et
- une étape de mémorisation (E80) de l'adresse (@20) dudit dispositif de contrôle (20) avec lequel il a négocié ledit contrat pour la mise en oeuvre dudit service.

10. Programme d'ordinateur comportant des instructions pour l'exécution des étapes de procédé de négociation selon la revendication 9 lorsque ledit programme est exécuté par un ordinateur (50).

11. Serveur (50) pour négocier une qualité de service de transport de bout à bout avec un dispositif de contrôle (20) dans un réseau de télécommunication (2), **caractérisé en ce qu'**il comporte :
- des moyens d'envoi audit dispositif de contrôle (20) selon la revendication 4 d'une requête (R1) pour initier une négociation de contrat, ce contrat devant définir les caractéristiques dudit service, ledit contrat comportant au moins un paramètre de qualité dudit service ;
- des moyens de réception d'une réponse (R2) comportant une offre de transport établie par ledit dispositif de contrôle pour mettre en oeuvre ledit service ;
- des moyens de sélection d'au moins un composant de service à partir de ladite offre et d'envoi d'une liste desdits composant audit dispositif de contrôle (20);
- des moyens de réception d'un accusé de réception positif émis par ledit dispositif de contrôle ; et
- des moyens d'envoi d'un message d'acquittement positif audit dispositif de contrôle (20) et
- des moyens de mémorisation de l'adresse (@20) dudit dispositif de contrôle (20) avec lequel il a négocié ledit contrat pour la mise en oeuvre dudit service.

## Patentansprüche

1. Verfahren, das von einer Kontrollvorrichtung (20) durchgeführt wird, zum Kontrollieren der Qualität eines Ende-zu-Ende-Dienstes in einem Telekommunikationsnetz (2), umfassend:
- einen Schritt (F10) der Aushandlung, mit dem Anbieter des Dienstes (50), eines Vertrages (SID), der wenigstens einen Qualitätsparameter des Dienstes umfasst;
- einen Schritt (F22) der Bestimmung der Funktionen (T_{SID}), welche von dem Netz (2) ausgeführt werden müssen, um den Vertrag (SID) zu erfüllen;
- einen Schritt (F30) des Empfangs einer Anforderung (RA2) eines Endgerätes (10), um auf den Dienst zuzugreifen;
- einen Schritt (F40) der Auswahl, bei Empfang der Anforderung (RA2), wenigstens einer Einrichtung (31, 32, 33) des Netzes, die in der Lage ist, die Funktionen (T_{SID}) auszuführen; und
- einen Schritt (F50) des Aufbaus, in dem Netz (2), eines Weges zwischen dem Endgerät (10) und dem Dienstanbieter (50) über die wenigstens eine Einrichtung (31, 32, 33), wobei der Schritt des Aufbaus nach dem Schritt der Auswahl ausgeführt wird, indem an jede der wenigstens einen Einrichtung (31, 32, 33) die Leistungsdaten der Funktionen, welche die wenigstens eine Einrichtung (31, 32, 33) erfüllen muss, sowie die Kennung der wenigstens einen Einrichtung der Kette, mit denen sie kommunizieren soll, gesendet werden.

2. Kontrollverfahren nach Anspruch 1, **dadurch gekennzeichnet, dass** der wenigstens eine Dienstgüteparameter in Abhängigkeit von wenigstens einem Leistungsmerkmal:
- des Endgerätes (10);
- eines Zugangsnetzes des Endgerätes (10) zu dem Telekommunikationsnetz (2);
- eines Codierungsprotokolls eines Datenstroms (FX), der zwischen dem Endgerät (10) und dem Dienstanbieter (50) transportiert werden muss, gewählt wird.

3. Kontrollverfahren nach Anspruch 1 oder 2, **dadurch gekennzeichnet, dass** die wenigstens eine Funktion aus der Gesamtheit ausgewählt wird, welche eine Funktion zur Transcodierung von Datenströmen (FX), eine Funktion zur Sicherung von Datenströmen (FX) und eine Funktion zum Routing von Datenströmen (FX) umfasst,
wobei die wenigstens eine Funktion dazu bestimmt ist, auf einen Datenstrom angewendet zu werden, der zwischen dem Endgerät (10) und dem Dienstanbieter (50) transportiert werden muss.

4. Vorrichtung (20) zur Kontrolle der Qualität eines Ende-zu-Ende-Dienstes, die in einem Telekommunikationsnetz verwendet werden kann, **dadurch gekennzeichnet, dass** sie umfasst:
- Mittel zum Aushandeln, mit einem Dienstanbieter (50), eines Vertrages (SID), der wenigstens einen Qualitätsparameter des Dienstes umfasst;
- Mittel zum Bestimmen der Funktionen (T_{SID}), welche von dem Netz (2) ausgeführt werden müssen, um den Vertrag (SID) zu erfüllen;
- Mittel zum Empfang einer Anforderung (RA2) eines Endgerätes (10), um auf den Dienst zuzugreifen;
- Mittel zur Auswahl, bei Empfang der Anforderung (RA2), wenigstens einer Einrichtung (31, 32, 33) des Netzes (2), die in der Lage ist, die Funktionen (T_{SID}) auszuführen; und
- Mittel zum Aufbau, in dem Netz (2), eines Weges zwischen dem Endgerät (10) und dem Dienstanbieter (50) über die wenigstens eine Einrichtung (31, 32, 33), wobei der Weg nach der Auswahl der wenigstens einen Einrichtung aufgebaut wird, indem von den Mitteln zum Aufbau an jede der wenigstens einen Einrichtung (31, 32, 33) die Leistungsdaten der Funktionen, welche die wenigstens eine Einrichtung (31, 32, 33) erfüllen muss, sowie die Kennung der wenigstens einen Einrichtung der Kette, mit denen sie kommunizieren soll, gesendet werden.

5. Vorrichtung (20) nach Anspruch 4, welche in einem hybriden Peer-Netzwerk (2) verwendet werden kann, **dadurch gekennzeichnet, dass** es aus einem Super-Peer dieses Netzwerks besteht.

6. Server (50), welcher mit einem Telekommunikationsnetz verbunden werden kann, **dadurch gekennzeichnet, dass** er umfasst:
- Mittel zum Empfang einer von einem Endgerät (10) kommenden Anforderung (RA1) für den Zugriff auf einen Dienst;
- Mittel zum Identifizieren, in einer Datenbank (55), der Adresse (@20) einer Vorrichtung (20) des Netzes (2) in Abhängigkeit von einer Kennung des Dienstes und von einem Vertrag (SID), der wenigstens einen Qualitätsparameter des Dienstes umfasst; und
- Mittel zum Weiterleiten des Endgerätes (10) zu der Vorrichtung (20), wobei der Server außerdem Mittel eines Servers nach Anspruch 11 umfasst.

7. Computerprogramm, welches Anweisungen zur Ausführung der Schritte des Verfahrens zur Qualitätskontrolle nach einem der Ansprüche 1 bis 3, wenn das Programm von einem Computer (20) ausgeführt wird, umfasst.

8. Durch einen Computer (20) lesbares Aufzeichnungsmedium, auf welchem ein Computerprogramm aufgezeichnet ist, das Anweisungen zur Ausführung der Schritte des Verfahrens zur Kontrolle der Dienstgüte nach einem der Ansprüche 1 bis 3 umfasst.

9. Von einem Server (50) durchgeführtes Verfahren zur Aushandlung einer Qualität eines Ende-zu-Ende-Transportdienstes in einem Telekommunikationsnetz (2), wobei dieses Verfahren umfasst:
- einen Schritt (E10) des Sendens, an eine Kontrollvorrichtung (20) nach Anspruch 4, einer Anforderung (R1) zum Einleiten einer Aushandlung eines Vertrages, wobei dieser Vertrag die Leistungsdaten des Dienstes definieren muss, wobei der Vertrag wenigstens einen Qualitätsparameter des Dienstes umfasst;
- einen Schritt (E20) des Empfangs einer Antwort (R2), die ein von der Kontrollvorrichtung erstelltes Transportangebot zum Durchführen des Dienstes umfasst;
- einen Schritt (E30) der Auswahl wenigstens einer Dienstkomponente ausgehend von dem Angebot und des Sendens einer Liste dieser Komponenten an die Kontrollvorrichtung (20);
- einen Schritt (E40) des Empfangs einer positiven Empfangsbestätigung, die von der Kontrollvorrichtung gesendet wurde; und
- einen Schritt (E50) des Sendens einer positiven Bestätigungsnachricht an die Kontrollvorrichtung (20); und
- einen Schritt der Speicherung (E80) der Adresse (@20) der Kontrollvorrichtung (20), mit welcher der Vertrag für die Durchführung des Dienstes ausgehandelt worden ist.

10. Computerprogramm, welches Anweisungen zur Ausführung der Schritte des Verfahrens zur Aushandlung nach Anspruch 9, wenn das Programm von einem Computer (50) ausgeführt wird, umfasst.

11. Server (50) zum Aushandeln einer Qualität eines Ende-zu-Ende-Transportdienstes mit einer Kontrollvorrichtung (20) in einem Telekommunikationsnetz (2), **dadurch gekennzeichnet, dass** er umfasst:
- Mittel zum Senden, an die Kontrollvorrichtung (20) nach Anspruch 4, einer Anforderung (R1) zum Einleiten einer Aushandlung eines Vertrages, wobei dieser Vertrag die Leistungsdaten des Dienstes definieren muss, wobei der Vertrag wenigstens einen Qualitätsparameter des Dienstes umfasst;
- Mittel zum Empfang einer Antwort (R2), die ein von der Kontrollvorrichtung erstelltes Transportangebot zum Durchführen des Dienstes umfasst;
- Mittel zur Auswahl wenigstens einer Dienstkomponente ausgehend von dem Angebot und zum Senden einer Liste dieser Komponenten an die Kontrollvorrichtung (20);
- Mittel zum Empfang einer positiven Empfangsbestätigung, die von der Kontrollvorrichtung gesendet wurde; und
- Mittel zum Senden einer positiven Bestätigungsnachricht an die Kontrollvorrichtung (20); und
- Mittel zur Speicherung der Adresse (@20) der Kontrollvorrichtung (20), mit welcher der Vertrag für die Durchführung des Dienstes ausgehandelt worden ist.

## Claims

1. Method, implemented by a monitoring device (20), for monitoring the quality of an end-to-end service in a telecommunications network (2), comprising:
- a step (F10) of negotiating, with the provider of said service (50), a contract (SID) comprising at least one parameter of quality of said service;
- a step (F22) of determining the functions (T_{SID}) which must be implemented by the network (2) to satisfy said contract (SID);
- a step (F30) of receiving a request (RA2) from a terminal (10) to access said service;
- a step (F40) of selecting, on receipt of said request (RA2), at least one item of equipment (31, 32, 33) of said network able to implement said functions (T_{SID}); and
- a step (F50) of establishing, in said network (2), a path between said terminal (10) and said service provider (50), via said at least one item of equipment (31, 32, 33), said step of establishing being performed after said step of selecting, by dispatching, to each of said at least one item of equipment (31, 32, 33), the characteristics of said functions that said at least one item of equipment (31, 32, 33) must fulfil, as well as the identifier of said at least one item of equipment of the chain, with which it must communicate.

2. Control method according to Claim 1, **characterized in that** said at least one parameter of service quality is chosen as a function of at least one characteristic:
- of said terminal (10);
- of a network for access of said terminal (10) to said telecommunications network (2);
- of a protocol for coding a data stream (FX) having to be transported between said terminal (10) and said service provider (50).

3. Control method according to Claim 1 or 2, **characterized in that** said at least one function is chosen from among the set comprising a data stream (FX) transcoding function, a data stream (FX) securing function and a data stream (FX) routing function,
said at least one function being intended to be applied to a data stream having to be transported between said terminal (10) and said service provider (50).

4. Device (20) for monitoring the quality of an end-to-end service that can be used in a telecommunications network, **characterized in that** it comprises:
- means for negotiating, with a service provider (50), a contract (SID) comprising at least one parameter of quality of said service;
- means for determining functions (T_{SID}) which must be implemented by the network (2) to satisfy said contract (SID);
- means for receiving a request (RA2) from a terminal (10) to access said service;
- means for selecting, on receipt of said request (RA2), at least one item of equipment (31, 32, 33) of said network (2) able to implement said functions (T_{SID}); and
- means for establishing, in said network (2), a path between said terminal (10) and said service provider (50), via said at least one item of equipment (31, 32, 33), the path being established after the selecting of said at least one item of equipment, by dispatching by said means for establishing, to each of said at least one item of equipment (31, 32, 33), the characteristics of said functions that said at least one item of equipment (31, 32, 33) must fulfil, as well as the identifier of said at least one item of equipment of the chain, with which it must communicate.

5. Device (20) according to Claim 4, that can be used in a hybrid peers network (2), **characterized in that** it consists of a super peer of said network.

6. Server (50) that can be connected to a telecommunications network, **characterized in that** it comprises:
- means for receiving, originating from a terminal (10), a request (RA1) for access to a service;
- means for identifying, in a database (55), the address (@20) of a device (20) of said network (2) as a function of an identifier of said service and of a contract (SID) comprising at least one parameter of quality of said service; and
- means for redirecting said terminal (10) to said device (20), said server furthermore comprising means of a server according to Claim 11.

7. Computer program comprising instructions for the execution of the steps of the method of monitoring quality according to any one of Claims 1 to 3 when said program is executed by a computer (20).

8. Recording medium readable by a computer (20) on which is recorded a computer program comprising instructions for the execution of the steps of the method of monitoring service quality according to any one of Claims 1 to 3.

9. Method, implemented by a server (50), for negotiating a quality of end-to-end transport service in a telecommunication network (2), this method comprising:
- a step (E10) of dispatching to a monitoring device (20) according to Claim 4 a request (R1) to initiate a contract negotiation, this contract having to define the characteristics of said service, said contract comprising at least one parameter of quality of said service;
- a step (E20) of receiving a response (R2) comprising a transport offer established by said monitoring device to implement said service;
- a step (E30) of selecting at least one service component on the basis of said offer and of dispatching a list of said components to said monitoring device (20) ;
- a step (E40) of receiving a positive acknowledgment of receipt sent by said monitoring device; and
- a step (E50) of dispatching a message of positive acknowledgment to said monitoring device (20) and
- a step (E80) of storing the address (@20) of said monitoring device (20) with which it has negotiated said contract for the implementation of said service.

10. Computer program comprising instructions for the execution of the steps of the method of negotiation according to Claim 9 when said program is executed by a computer (50).

11. Server (50) for negotiating a quality of end-to-end transport service with a monitoring device (20) in a telecommunication network (2), **characterized in that** it comprises:
- means for dispatching to said monitoring device (20) according to Claim 4 a request (R1) to initiate a contract negotiation, this contract having to define the characteristics of said service, said contract comprising at least one parameter of quality of said service;
- means for receiving a response (R2) comprising a transport offer established by said monitoring device to implement said service;
- means for selecting at least one service component on the basis of said offer and of dispatching a list of said components to said monitoring device (20);
- means for receiving a positive acknowledgment of receipt sent by said monitoring device; and
- means for dispatching a message of positive acknowledgment to said monitoring device (20) and
- means for storing the address (@20) of said monitoring device (20) with which it has negotiated said contract for the implementation of said service.
